(19) **Europäisches Patentamt**
**European Patent Office**
**Office européen des brevets**

(11) **EP 1 304 824 B1**

(12) **EUROPEAN PATENT SPECIFICATION**

(45) Date of publication and mention
of the grant of the patent:
**26.12.2007 Bulletin 2007/52**

(51) Int Cl.:
*H04L 27/00* (2006.01)    *H04K 1/00* (2006.01)

(21) Application number: **00990137.2**

(86) International application number:
**PCT/RU2000/000313**

(22) Date of filing: **27.07.2000**

(87) International publication number:
**WO 2002/011342 (07.02.2002 Gazette 2002/06)**

(54) **METHOD FOR TRANSMITTING DATA BY MEANS OF CHAOTIC SIGNALS**

VERFAHREN ZUM ÜBERTRAGEN VON DATEN MITTELS CHAOTISCHER SIGNALE

PROCEDE DE TRANSMISSION D'INFORMATIONS AU MOYEN DE SIGNAUX CHAOTIQUES

(84) Designated Contracting States:
**AT BE CH CY DE DK ES FI FR GB GR IE IT LI LU MC NL PT SE**

(43) Date of publication of application:
**23.04.2003 Bulletin 2003/17**

(73) Proprietor: **Dmitriev, Alexander Sergeevich Moscow, 121609 (RU)**

(72) Inventors:
• **DMITRIEV, Alexander Sergeevich**
  **Moscow, 121609 (RU)**
• **PANAS, Andrey Ivanovich**
  **Fryazino,**
  **Moskovskaya obl., 141120 (RU)**
• **STARKOV, Sergey Olegovich**
  **Obninsk,**
  **Kaluzhskaya obl., 249020 (RU)**
• **ANDREEV, Yuri Veniaminovich**
  **Moskovskaya obl., 141700 (RU)**
• **KUZMIN, Lev Viktorovich**
  **Moscow, 113303 (RU)**

• **KYARGINSKII, Boris Egorovich**
  **Moskovskaya obl., 141120 (RU)**
• **MAKSIMOV, Nikolai Andreevich**
  **Mytischi, 141009 (RU)**

(74) Representative: **Patentanwälte**
**Zellentin & Partner**
**Innere Wiener Strasse 8**
**81667 München (DE)**

(56) References cited:
**WO-A-98/59458**        **WO-A1-98/59458**
**US-A- 5 291 555**      **US-A- 5 402 334**
**US-A- 5 680 462**      **US-A- 5 923 760**

• **SUSHCHIK M ET AL: "CHAOTIC PULSE POSITION MODULATION: A ROBUST METHOD OF COMMUNICATING WITH CHAOS" IEEE COMMUNICATIONS LETTERS, IEEE SERVICE CENTER, PISCATAWAY, NJ, US, vol. 4, no. 4, April 2000 (2000-04), pages 128-130, XP000949779 ISSN: 1089-7798**

**Description**

**Field of the Invention**

The present invention relates to the field of the spread spectrum communications using chaotic signals.

**Background of the Invention**

At present, it is known that chaotic signals generated by non-linear deterministic dynamic systems, the so-called dynamic chaos, possess a number of properties that make such signals suitable for transmission of information (A.S. DMITRIEV, A.I. PANAS, S.O. STARKOV. Ring oscillating systems and their application to the synthesis of chaos generators // Int. J. of Bifurcation and Chaos, Vol. 6, No. 5 (1996) 851-865). In particular, the promising nature of using chaotic signals as carrier or modulated waveforms is shown (A.S. DMITRIEV, A.I. PANAS, S.O. STARKOV. Dynamic chaos as a paradigm for modem telecommunication systems // Uspekhi Sovremennoy Radielektroniki [in Russian], 1997, No. 10, p. 4; M. HASLER. Achievements in the field of information transmission with the use of chaos // Uspekhi Sovremennoy Radielektroniki [in Russian], 1998, No. 11, p. 33). Certain information transmission circuits using the dynamic chaos are proposed, in particular, a circuit for chaotic masking an information signal (L. KO-CAREV, K.S. HALLE, K. ECKERT, L. CHUA, U. PARLITZ. Experimental demonstration of secure communications via chaotic synchronization // Int. J. Bifurcation and Chaos, 1992, v. 2, No. 3, p. 709), a circuit with switching chaotic modes [H. DEDIEU, M, KENNEDY, M. HASLER. Chaos shift keying: Modulation and demodulation of a chaotic carrier using self-synchronizing Chua's circuits // IEEE Trans. Circuits and Systems, October 1993, v. CAS-40, No. 10, p. 634), circuits with non-linear mixing an information signal to a chaotic signal (A.R. VOLKOVSKI, N.V. RULKOV. Synchronous chaotic response of non-linear system of the information transmission with a chaotic carrier // Letters to Zhurn. Techn. Fiz. [in Russian], 1993, v. 19, No. 3, p. 71; A. DMITRIEV, A. PANAS, S. STARKOV. Experiments on speech and music signals transmission using chaos // Int. J. of Bifurcation and Chaos, 1995, v. 5, No. 3, p. 371), etc. Under consideration are possibilities for generating direct chaotic communication systems, where chaotic oscillations appear as an information carrier generated quite within the frequency band in which a transmission of information takes place, for example, in microwaves (A.S. DMITRIEV, B.E. KYARGINSKI, N.A. MAKSIMOV, A.I. PANAS, S.O. STARKOV. Prospects of creating direct chaotic communication systems in radio and microwave bands // Radiotekhnika [in Russian], 2000, No. 3, p. 9).

There are two varieties of methods for spread-spectrum communications. The first one of those varieties uses a narrow-band periodic carrier of information. Examples are code-division multiple-access system (CDMA), as well as systems with a frequency modulation, where the frequency band of the transmitted information is essentially narrower than the frequency band of the transmitted signal. The other variety of the methods for spread-spectrum communications uses a principally wide-band carrier which frequency band is wider than the frequency band of the transmitted information (US Patent No. 4,363,130, published Dec 7, 1982). Frequency-hopping spread-spectrum systems should also be referred to this type (J. PROAKIS. Digital Communication, McGraw-Hill, Inc., New-York, 1995, p. 741).

The closest analogue to the method according to the present invention is the frequency-hopping spread-spectrum communication method comprising steps of: at the transmitting side, forming a wide-band information carrier within a predetermined information transmission bandwidth; modulating the information carrier with an information signal; transmitting the modulated information carrier via a communication channel from the transmitting side to the receiving side; at the receiving side, demodulating the received information carrier to extract the information signal (see said above monograph of J. PROAKIS, as well as the US-A-5,923,760, published Jul 13, 1999).

As distinct from this, in the present invention, the step of forming a wide-band information carrier is performed by means of a chaotic dynamic system that generates chaotic signals directly within the entire frequency range of the information transmission (e.g., within a microwave band). In order to use said signals as a wide-band carrier, it is necessary to solve the problem of generating chaotic oscillations within the required frequency band of the electromagnetic spectrum, as well as to elaborate effective methods for inputting an information into the chaotic signal at the transmitting side and for extracting it out of the said signal at the receiving side. By present, only directions for developing the systems operating in accordance with such a principle have been outlined, yet not their particular microwave implementations (see said above article by A.S. DMITRIEV in Radiotekhnika Magazine).

**Summary of the Invention**

Hence, the task of the present invention is to develop a method for transmitting an information using chaotic signals, a technical result of which method is in implementation of communication systems in which an information is input into the chaotic signal generated directly within the information transmission band, which communication systems are hereinafter referred to as direct chaotic communication systems.

In order to solve this task with achieving said technical result, a method for transmitting an information using chaotic signals is provided, which method comprising steps of: at the transmitting side, synthesizing beforehand a chaotic dynamic system; forming, by means of the chaotic dynamic system, a wide-band information carrier within a predetermined information transmission bandwidth; modulating the information carrier with an information signal; transmitting the modulated information carrier via a communication channel from the transmitting side to the receiving side; at the receiving side, demodulating the received information carrier to extract the information signal. According to the present invention, a structure of the chaotic dynamic system is synthesized according to predetermined characteristics of the wide-band information carrier; in the step of synthesizing the chaotic dynamic system, parameter regions of said system are revealed, which parameters ensure a uniform behavior of the chaotic dynamic system; on the basis of the identified parameter regions, parameter values are selected for this chaotic dynamic system, which values ensure the step of forming said wide-band information carrier in the form of a chaotic information carrier having at least required spectrum characteristics; the step of modulating is performed by means of forming, in accordance with the information signal, chaotic radio or optical pulses having a predetermined duration with predetermined time intervals between these pulses, and then transmitting the thus modulated information carrier via the communication channel; the step of receiving and demodulating at the receiving side is performed by means of a dynamic system matched in its behavior with the chaotic dynamic system at the transmitting side.

One distinction of this method is in that a dynamic self-oscillating system with at least one active element and a supplementary frequency-selective structure for forming said wide-band information carrier are used as said chaotic dynamic system.

To do this, the dynamic self-oscillating system is supplemented with control components for selecting a mode of forming the wide-band information carrier and/or forming the chaotic radio or optical pulses and intervals between them, or the step of forming the radio or optical pulses and intervals between them is performed in a supplementary feedback circuit of the dynamic self-oscillating system at the transmitting side.

Another distinction of said method is in that the step of forming radio or optical pulses with predetermined duration and time intervals between them is performed by controlling a behavior of the chaotic dynamic system.

In this case, the step of controlling the behavior of the chaotic dynamic system is performed by controlling a change of parameters of the chaotic dynamic system, or by controlling the trajectory of the representative point in the phase state space of the chaotic dynamic system.

The step of controlling the trajectory is performed by changing initial conditions of an actuation of the chaotic dynamic system, or by holding the trajectory of the representative point in the phase state space of the chaotic dynamic system in a predetermined area of the phase state space during a predetermined time period.

Yet another distinction of this method consists in that durations of the chaotic radio or optical pulses and/or intervals between them are formed using chaotic samples generated by a supplementary chaotic dynamic system, and an input information to be transmitted.

Yet another distinction of this method is in that the step of receiving and demodulating at the receiving side is performed using a chaotic dynamic system which behavior is at least partly synchronized with a chaotic signal of the chaotic dynamic system at the transmitting side.

Yet another distinction of this method is in that the step of receiving and demodulating at the receiving side is performed using a chaotic dynamic system which output signal is matched with an envelope of the signal of the chaotic dynamic system at the transmitting side.

From the prior art, information sources are not known which describe the whole set of substantial features of this method, which allows to consider it novel.

From the prior art, information sources are also not known which describe the set of distinctive features of this method, which allows to consider it having inventive step.

**Brief Description of Drawings**

Possible implementations of this method are illustrated by means of drawings made available to give a clearer idea of the proposed invention.

Figure 1 shows a circuit of the chaotic signal generator using a tunnel diode.
Figure 2 shows a circuit of the chaotic signal generator in the form of Chua's circuit.
Figure 3 shows a circuit of the ring-circuit chaotic signal generator with one and a half degrees of freedom.
Figure 4 shows a general block diagram of the information transmission system for implementing the method according to the present invention, and signal profiles in various nodes of the circuit.
Figure 5 shows the shape of a chaotic radio or optical pulse.
Figure 6 shows the shape of chaotic pulses as they are formed using the information binary signal.
Figure 7 illustrates the formation of chaotic radio or optical pulse stream with the use of a supplementary chaotic dynamic system.

Figure 8 shows the appearance and diagram of a possible dynamic self-oscillating system for implementing the method according to the present invention.

Figure 9 shows a typical power spectrum of chaotic signals generated by the chaotic self-oscillating system in Figure 8.

Figure 10 shows a possible circuit for performing a non-coherent reception according to the present invention, and signal profiles in various nodes of the circuit.

Figure 11 shows a possible circuit for the reception with the chaotic dynamic system synchronization for the method according to the present invention.

Figure 12 shows oscillograms of chaotic radio pulses in a communication channel and their envelope extracted at the receiving side.

## Preferable Embodiments of the Invention

Prior to describing potential embodiments of the present invention, let us consider the features of the underlying dynamic (or deterministic) chaos.

The term 'deterministic chaos' refers to a complicated non-periodic motion produced by non-linear dynamic systems. This motion can occur in the complete absence of an external noise and is fully determined by the properties of the deterministic dynamic system itself. The dynamic chaos possesses many features of random processes, i.e., continuous power spectrum, exponentially decreasing autocorrelation function, unpredictability for long time periods.

In describing the behavior of dynamic systems the term 'phase space' is employed, in which a system state is depicted as a point, and the time evolution of this state is depicted as a phase trajectory along which the representative point moves. The systems with deterministic chaos have in their phase space an attracting manifold where the phase trajectories gather into a single course. This attracting manifold is referred to as a strange attractor.

By present, a great number of dynamic systems capable of generating chaotic signals has been offered and investigated. The simplest dynamic system capable of generating chaos is a discrete-time dynamic system, i.e., the so called logistic map

$$x(k+1) = \mu\, x(k)\, (1 - x(k)). \qquad (1)$$

In a certain range of values of the parameter $\mu$, the equation (1) generates a non-periodic infinite sequence of samples $x(k)$.

The simplest continuous-time chaotic systems are described by merely three ordinary differential equations, and at least a part of them represents generators made by supplementing one or several elements to standard generators of regular oscillations. Other sources of chaos could not be so simply linked with traditional electronic generators, however, they can also be implemented with contemporary circuit elements. Typical examples of chaos sources with one and a half degrees of freedom are the following systems:

*Tunnel diode generator* (A.S. PIKOVSKI, M.I. RABINOVICH. A simple oscillator with stochastic behavior // DAN SSSR [in Russian], 1978, v. 239, No. 1-2, p. 301). The generator equations in dimensionless form are as follows:

$$x' = y - \delta\, z$$

$$y' = -x + 2\gamma\, y + \alpha\, z + \beta' \qquad (2)$$

$$\mu\, z' = x - f(z)$$

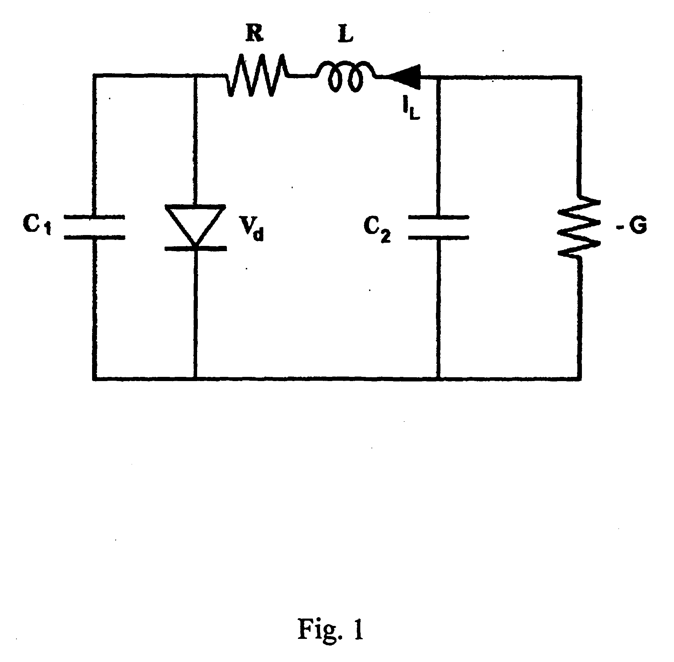

where $f(z)$ stands for non-linear response of the tunnel diode; $\alpha$, $\beta$, $\gamma$, and $\delta$ stand for parameters. The generator circuit is shown in Figure 1.

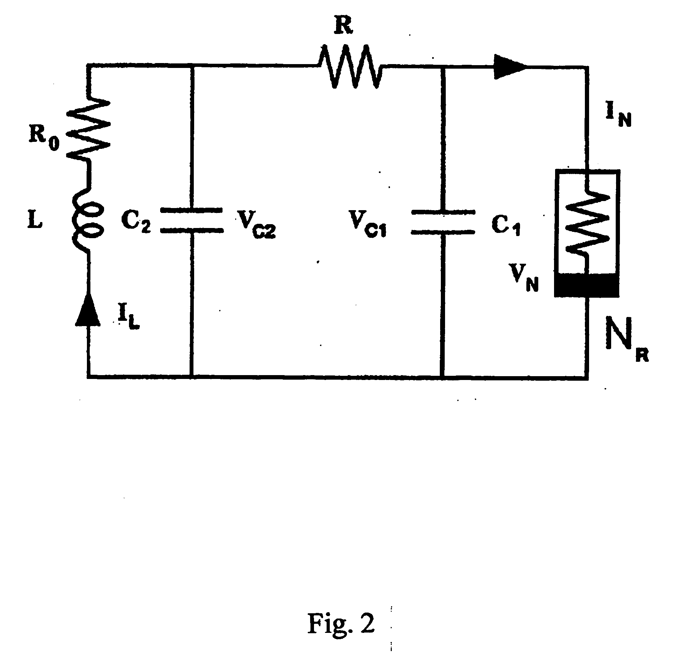

*Chua's circuit* (T. Matzumoto. A chaotic attractor from Chua's circuit // IEEE Trans. Circuits and Syst. 1984, v. CAS-31, No. 12, p. 1055). The electrical diagram of the circuit is shown in Figure 2. The dimensionless equations describing the circuit are as follows:

$$x' = \alpha(y - x - h(x))$$

$$y' = x - y + z, \qquad (3)$$

$$z' = -\beta\, y - yz$$

where $\alpha$, $\beta$ and $\gamma$ are parameters. The non-linear element response of system (3) is assumed to be piecewise-linear.

$$h(x) = m_1 + 0.5(m_o - m_1)\{|x + 1| - |x - 1|\}. \qquad (4)$$

In equation (4), $m_o$ and $m_1$ stand for the slopes of the normalized piecewise-linear function.

*Ring-circuit oscillator* (A.S. DMITRIEV, V.Ya. KISLOV. Stochastic oscillations in oscillator with inertial first-order time delay// Radiotekhnika i Elektronika [in Russian], 1984, v. 29, No. 12, p. 2389). The oscillator model dimensionless equations are:

$$Tx' = -x + Mf(z)$$

$$y' = x - z \qquad (5)$$

$$z' = -y - \alpha\, z$$

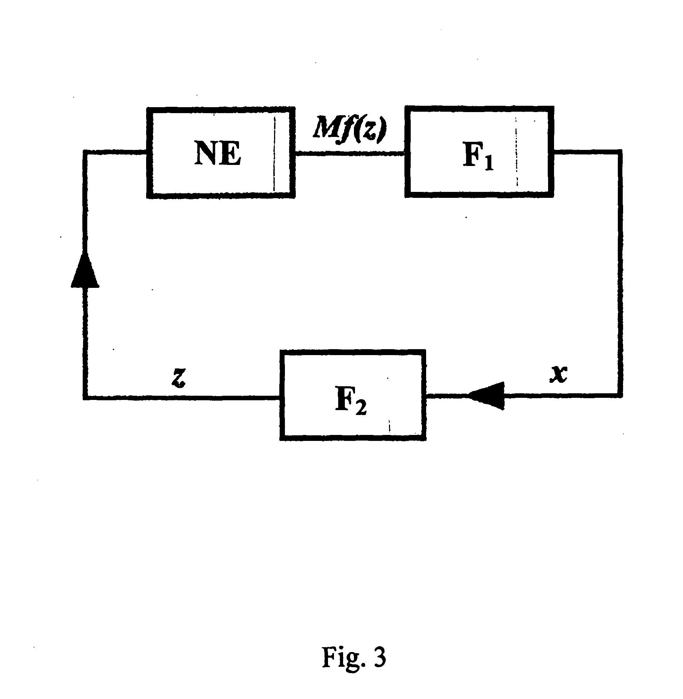

where $T$, $M$ and $\alpha$ stand for parameters, and $f(z)$ is a non-linear element response. Block diagram of such an oscillator is shown in Figure 3, where $NE$ denotes the non-linear element, and $F_1$ and $F_2$ denote low-pass filters of the first and second order, respectively.

Trajectories of chaotic systems are very sensitive to initial conditions. At the same time, oscillation modes of chaos sources demonstrate variety of behavior when changing the system parameters. If the number of essential parameters in the system increases, this normally results in a growing variety of dynamic modes. The Chua's system is a typical example. Variety of chaotic modes may also increase with increasing a dimension of the dynamic system.

A large number of various oscillation modes with various spectral characteristics within the same system means that modes change at a small change of the system parameters. This feature allows to control chaotic systems at the power levels much lower than the power of a chaotic signal itself, which is no doubt useful for sufficiently powerful chaos sources. The same feature under equal other conditions can provide a higher rate of chaotic oscillation modulation in comparison with a modulation rate in classic systems. In general, due to the possibility of controlling chaotic modes by means of minor changes in the system parameters, one may expect an improved power efficiency of communication systems with chaos in comparison with traditional systems.

By their nature, the chaotic signals possess continuous spectrum that spreads over a wide frequency band. Conventional modulation methods are capable, in principle, to provide the transmitted signal bandwidth of up to 10-20% relative to the carrier frequency. However, this is obtained by means of rather complicated technical solutions. As to chaotic signals, they are wide-band by their nature. Potentially, this enables to modulate a chaotic carrier with a wide-band information signal retaining the spectral properties of the chaotic carrier practically intact. Thus, this gives a possibility to rather simply implement not only wide-band communication systems but also super wide-band ones.

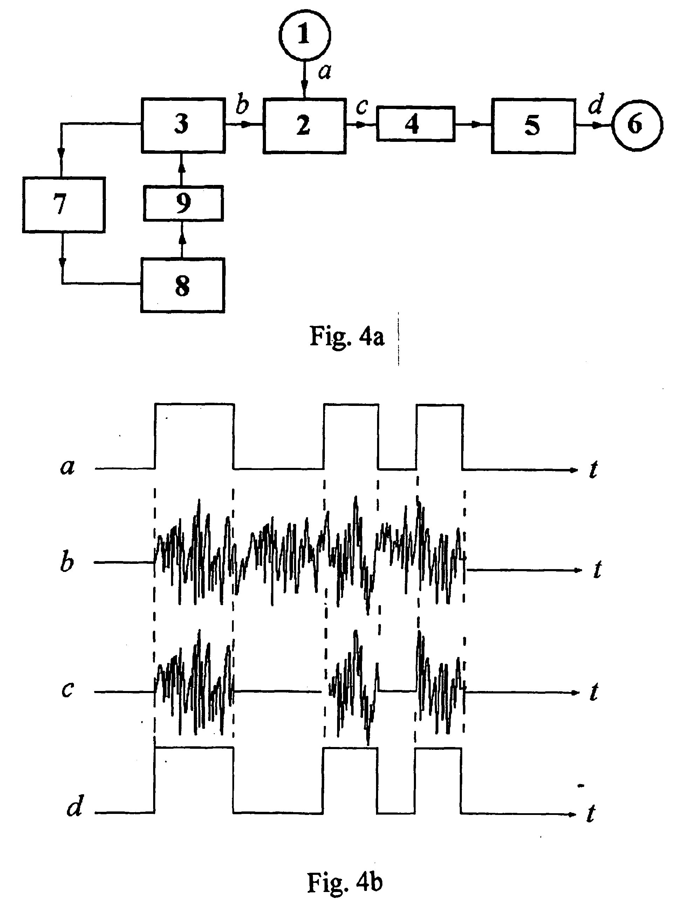

Method for transmitting information using chaotic signals in accordance with the present invention can be implemented by means of a communication system, which block diagram is shown in Figure 4a. In this system, an information signal 1 of the transmitting side is fed to a chaotic radio or optical pulse generator 2 carrying out, in this particular case, the function of a modulator of a wide-band information carrier generated by a chaotic dynamic system 3. The modulated signal is transmitted via a communication channel 4 to the receiving side where it is processed by a dynamic system 5, which results in retrieval of an information signal 6. Figure 4b shows the signal waveforms in various nodes of the circuit in Figure 4a.

The method in accordance with the present invention uses an information transmission by means of information signals in the form of chaotic radio pulses or chaotic optical pulses. In this description, a chaotic radio pulse refers to a pulse with chaotic filling, which spectrum is in the area of radio or microwave frequencies, while a chaotic optical pulse refers to a pulse with chaotic filling, which spectrum is at least in a part of frequency region occupied by an infrared radiation, visible light and ultraviolet radiation. In this case, the term 'chaotic' is referred to a radio or optical pulse, which duration exceeds the characteristic period of chaotic signal oscillations. The information transmitted by means of sequences of such pulses may be encoded by the pulse location in time domain, by the duration of the pulses, by the distance between the pulses, etc.

the method for transmitting information using chaotic signals in accordance with the present invention is based on three main ideas that make it practically realizable: 1) a chaos source generates chaotic oscillations directly within a predetermined band of radio, microwave, infrared, optical, or ultraviolet band; 2) an information signal inputting into the chaotic signal is performed by means of forming a corresponding sequence of chaotic radio or optical pulses; 3) a dynamic system matched in terms of its behavior with the chaotic system of the transmitting side is used for retrieving the information.

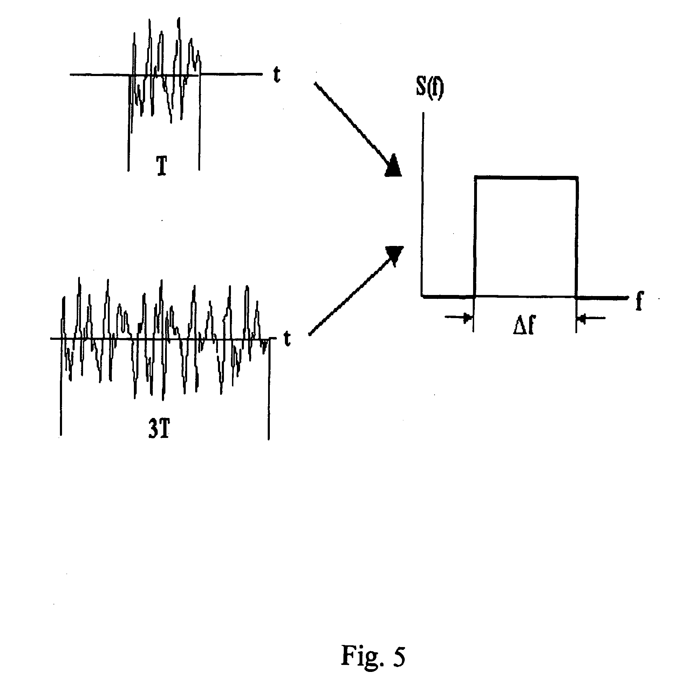

As was stated above, a chaotic radio or optical pulse is a fragment of a chaotic signal having a duration which exceeds its characteristic period. The frequency bandwidth of the chaotic radio or optical pulse is determined by the frequency bandwidth of the original chaotic signal generated by a chaos source, and is independent from the pulse duration in a wide range (Figure 5). This makes a chaotic radio or optical pulse essentially different from a classic radio pulse filled with a fragment of a periodic carrier, a frequency band $\Delta f$ of which pulse is determined by its length $T$:

$$\Delta f = 1/T \qquad (6)$$

The capability of retaining a pulse bandwidth when changing a pulse duration enables to implement flexible schemes for modulating a pulse stream at fixed frequency parameters of transmitter output circuits and receiver input circuits. For example, a change in a pulse duration does not require to change the band of the input filter and low-noise amplifier.

An increase of the duration of chaotic radio or optical pulse raises the interference immunity of a communication scheme. In this case, the pulse energy increases, and this factor may be used to control the equipment operation distance without altering the peak transmitter power.

The direct chaotic communication system for embodying the method for transmitting information using chaotic signals in accordance with the present invention can use both single pulses and pulse sequences in order to transmit an information bit. In any of these two cases, a sequence of chaotic radio or optical pulses is formed in the time domain.

The duration of chaotic radio or optical pulses and the average duty cycle between pulses are variable parameters. This enables to control flexibly the data transmission rate by means of changing the repetition rate and the average power of the signal being transmitted.

Due to said properties of a chaotic radio or optical pulse, these manipulations do not result in an essential change of the spectrum characteristics of the signal being transmitted relative to the signal of the chaos source. No additional spectral components arise in the signal being transmitted.

In the method for transmitting information using chaotic signals in accordance with the present invention, an information stream may be formed by means of altering the distance between the pulses, the pulse duration, the root-mean-square amplitude of the pulses, a combination of these parameters, etc. For example, the duration of formed radio or optical pulses can be varied from the value $T \sim 1/\Delta f$ to the value $T \to \infty$, where $\Delta f$ stands for frequency bandwidth of the signal formed by the chaos source.

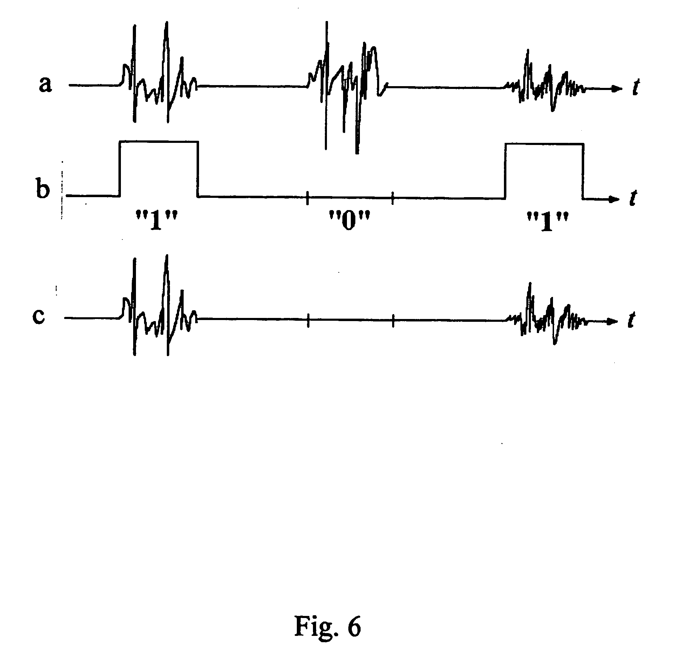

A sequence of radio or optical pulses may be formed with a fixed pulse repetition rate and with a fixed duration of pulses. In this case, the presence of a pulse on a given position in the sequence corresponds to the transmitted symbol "1", while the absence of the pulse corresponds to the symbol "0" (see Figure 6). In the receiver, the pulses are fixed, their parameters and location in the stream are determined, and useful information is extracted from the signal.

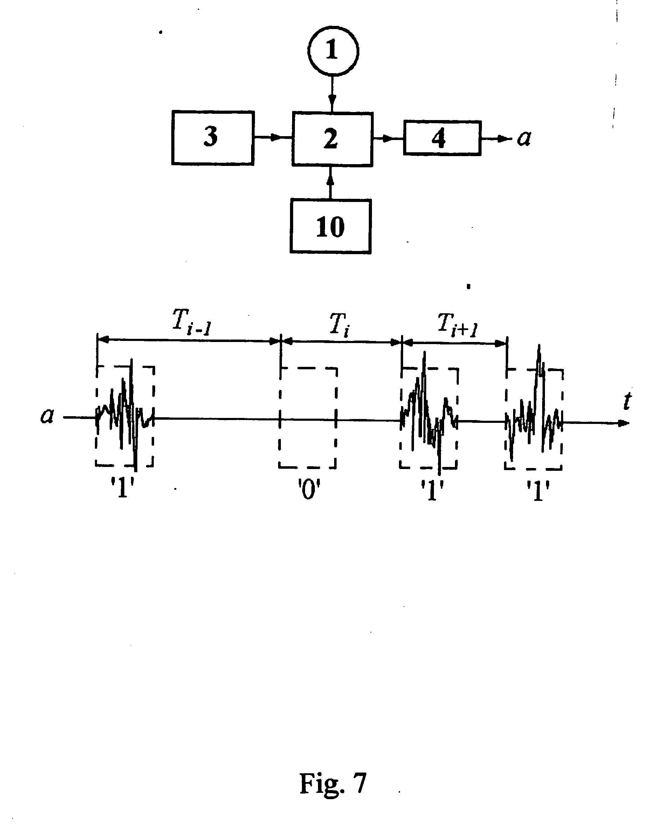

A stream of chaotic radio or optical pulses may also be formed with a fixed duration of pulses and with chaotic intervals between the pulses $\Delta T_i$ determined by the dynamics of a supplementary dynamic chaotic system 10 (Figure 7a) described by the equation

$$\Delta T_{i+1} = F(\Delta T_i) \qquad (7)$$

In this case, the presence of a chaotic radio or optical pulse on a given position in the stream corresponds to the transmitted symbol "1", while the absence of the pulse corresponds to the symbol "0" (see Figure 7b). At the receiving side, with the help of a copy of the supplementary dynamic system 10, the expected time positions of chaotic radio or optical pulse arrival are determined, the presence or absence of the pulse on the expected position is fixed, and useful information is extracted.

As is stated above, the wide-band carrier is formed in a chaos source represented by the dynamic chaotic system 3 (Figure 4). The structure of this dynamic chaotic system 3 is synthesized beforehand according to predetermined characteristics of the wide-band information carrier. In the course of synthesizing such a chaotic dynamic system, the regions of its parameters related to a uniform behavior of this chaotic dynamic system are revealed, which behavior is necessary for generating a chaotic signal with required at least spectral characteristics. This circumstance is denoted in Figure 4 by the block 7. On the basis of these revealed regions for the chaotic dynamic system, values of its parameter are selected, which values ensure the formation of the required wide-band information carrier in the form of a chaotic information carrier with the required at least spectrum characteristics by which the transmission of information with the spectrum spreading is ensured. This fact is noted in Figure 4 by means of block 8.

Furthermore, Figure 4 shows a control element 9 by means of which the chaotic dynamic system 3 is controlled. In a particular case, this chaotic dynamic system 3 can be implemented as a dynamic self-oscillating system which has at least one active element and an additional frequency-selective structure for forming the wide-band information carrier, parameters of which element and structure are controlled by means of the control component 9 shown in Figure 4.

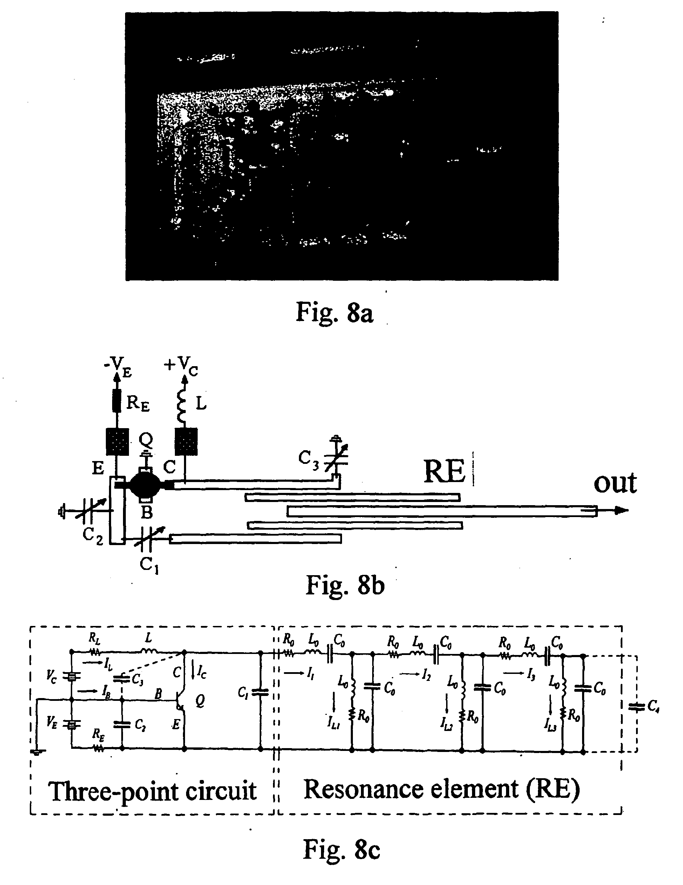

A specific embodiment of the dynamic self-oscillating system 3 has been described, for example, in the aforementioned article (A.S. DMITRIEV, B.E. KYARGINSKI, N.A. MAKSIMOV, A.I. PANAS, S.O. STARKOV. Prospects of creating direct chaotic communication systems in radio and super high frequency bands // Radiotekhnika [in Russian], 2000, No. 3, p. 9). Appearance of the system is shown in Figure 8a. This dynamic self-oscillating system generates chaotic oscillations in a super high frequency band and is implemented (see Figure 8b) according to a three-point circuit on a single transistor, between the collector and emitter of which a resonance element (RE) is included, which functions are carried out by a coupled strip line resonator. Characteristics of the latter are changed with the help of a reactive element that in the present case is represented by a capacitor $C_3$, while the circuit modes are tuned also by means of variable capacitors $C_1$, $C_2$ and by altering voltages $V_E$ and $V_C$. An equivalent circuit of the chaotic dynamic system is shown in Figure 8c.

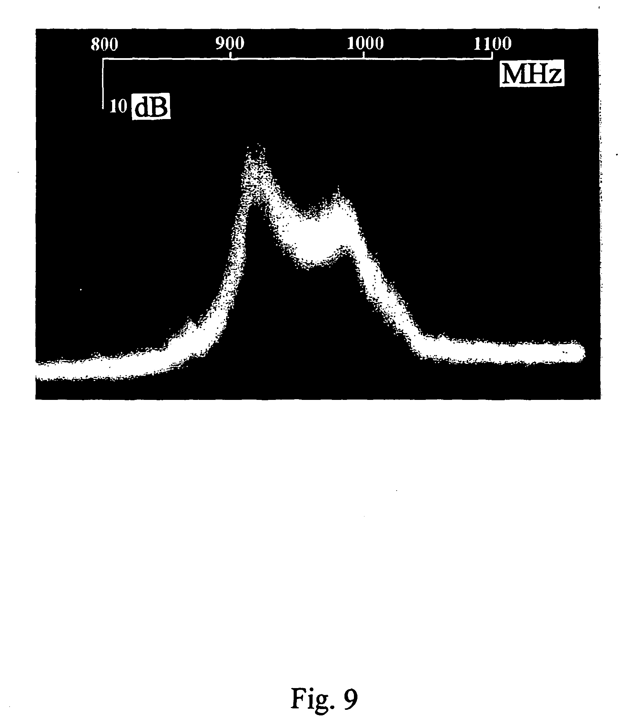

Generally speaking, classic single-transistor three-point circuits are intended to generate periodic signals. However, they may also generate chaotic oscillations both in low-frequency band and in radio and super high frequency bands. A peculiarity of chaotic modes of such a generator is in the wide-band nature of oscillations excited therein: the power spectrum of the oscillations extends both to the region of very low frequencies and to the region of high frequencies exceeding many time the basic generation frequency $f_o$. In order to obtain a chaotic signal within a frequency band $\Delta f$, the aforementioned resonance element (RE) has been included into the circuit of such a generator, which RE ensures conditions for generating oscillations mainly in the bandwidth of this resonance element RE. The power spectrum of the generated chaotic signal is shown in Figure 9. This principle of generating chaotic oscillations with a predetermined power spectrum has been proposed and investigated in the following studies (Yu.L. BELSKI, A.S. DMITRIEV, A.I. PANAS, S.O. STARKOV. Synthesis of band-pass signals in self-oscillating systems // Radiotekhnika i Elektronika [in Russian], 1992, v. 37, No. 4 p. 660; A.S. DMITRIEV, A.I. PANAS and S.O. STARKOV. Ring oscillating systems and their application to the synthesis of chaos generating // International J. Bif. and Chaos, 1996, v. 6, No. 5, p. 851).

A change of parameters of the chaotic dynamic system 3 using the control element 9 (resonance element RE in Figure 8b) results in controlling the behavior of the chaotic dynamic system 3. Another method for controlling the chaotic dynamic system 3 is in controlling the trajectory of the representative point in the phase state space of said chaotic dynamic system 3 (see, for example, A.L. FRADKOV, A.Yu. POGROMSKI. Introduction to control of oscillations and chaos // World Scientific Publishing, World Scientific Non-linear Science, Series A, v. 35, 1998).

Hence, the built chaotic dynamic system 3 generates, at its output, chaotic oscillations with a predetermined power spectrum, which oscillations represent a wide-band information carrier. In order to transmit information with its help, this carrier should be modulated in one or another way. Such a modulation of the wide-band information carrier with the information to be transmitted can take place either subsequent to the generation of the wide-band carrier itself or in the course of this generation. In the first case, the chaotic pulse generator 2 (Figure 4) is, for example, a key element that transforms chaotic oscillations of the system 3 into chaotic radio or optical pulses having a required duration and required intervals between these pulses, and in the second case, generator 2 constitutes a part of the chaotic dynamic system 3, which can be represented, for instance, by capacitors $C_1$ or $C_2$, a change in which capacity can result in exciting or failure of generation in the circuit in Figure 8b.

A chaotic signal formed at the transmitting side is transmitted into the communication channel 4 (Figure 4a).

Extracting a useful information out of chaotic signals at the receiving side is performed by integrating power of received pulses within their duration limits. I.e., in this case, a communication system that implements the method in accordance with the present invention performs a non-coherent reception of chaotic radio or optical pulse sequence. This non-coherent reception is the demodulation of the received signal when a generated output signal is matched with an envelope of a signal generated by the chaotic dynamic system at the receiving side.

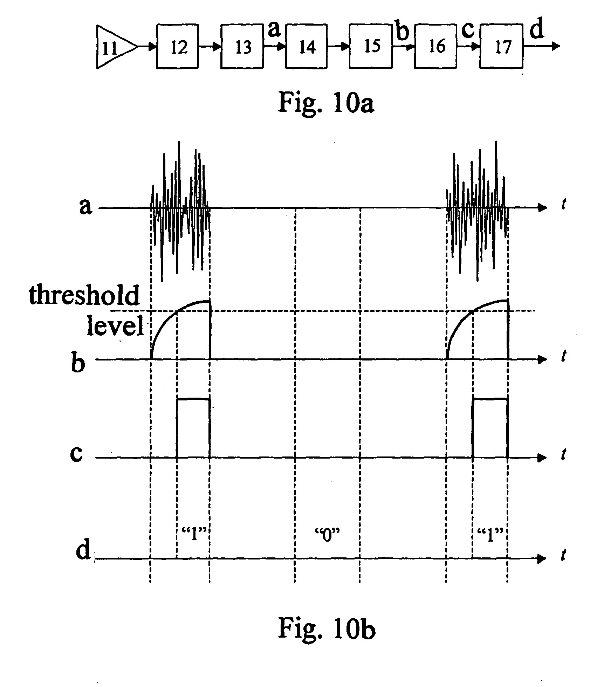

A possible circuit of the non-coherent reception is shown in Figure 10a where digits relate to the following elements: 11 - an antenna exposed to a stream of chaotic radio pulses; 12 - a filter tuned to the frequency band of the transmitted chaotic signal; 13 - an amplifier; 14 - a detector, e.g., a quadratic detector; 15 - an integrator with an integration time typical for a chaotic radio pulse duration; 16 - a threshold device; 17 - a decoder that correlates '1' with positions occupied by chaotic radio pulses, and '0' with positions free from radio pulses. Figure 10b shows profiles of signals in various points of the circuit (Figure 10a).

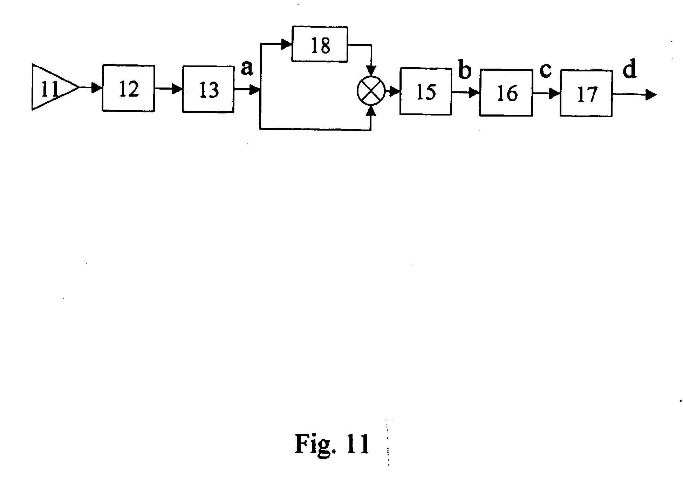

The proposed communication system is also capable to make a coherent reception. To do this, both reception and demodulation at the receiving side are carried out using a chaotic dynamic system, which behavior is at least partly synchronized with the chaotic signal of the chaotic dynamic system 3 of the transmitting side. A possible circuit implementing such a reception is shown in Figure 11 where digits relate to the following components: 11 - an antenna exposed to a stream of chaotic radio pulses; 12 - a filter tuned to the frequency band of the transmitted chaotic signal; 13 - an amplifier; 18 - a chaotic dynamic system similar to the chaotic dynamic system at the transmitting side; 15 - an integrator with an integration time typical for a chaotic radio pulse duration; 16 - a threshold device; 17 - a decoder that correlates '1' with positions occupied by chaotic radio pulses, and '0' with positions free from radio pulses.

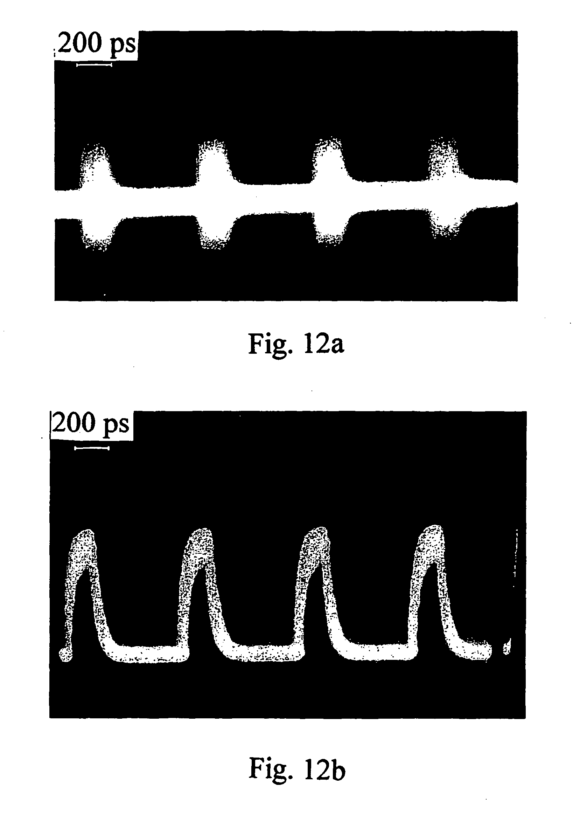

Figure 12a exemplifies an oscillogram of chaotic radio pulses in a communication channel, which are formed by means of the chaotic dynamic system shown in Figure 8. Figure 12b shows an envelope of chaotic radio pulses extracted by means of the non-coherent reception (Figure 10a).

## Industrial Applicability

The method for transmitting information using chaotic signals in accordance with the present invention can be employed in telecommunication technology in order to increase the rate and noise immunity of the information transmission.

The present invention has been described for the purpose of illustration only, but not in order to restrict the claimed method, which scope is defined in the enclosed Claims when taking into account possible equivalents of features set forth therein.

## Claims

**1.** A method for transmitting an information using chaotic signals, said method comprises steps of:

- at the transmitting side, synthesizing beforehand a chaotic dynamic system (3);
- forming, by means of said chaotic dynamic system (3), a wide-band information carrier within a predetermined information transmission bandwidth;
- modulating the information carrier with an information signal (1);
- transmitting the modulated information carrier via a communication channel (4) from the transmitting side to the receiving side;
- at the receiving side, demodulating the received information carrier to extract the information signal (6);

*characterized* in that:

- a structure of said chaotic dynamic system (3) is synthesized according to predetermined characteristics of said wide-band information carrier;
- in said step of synthesizing said chaotic dynamic system, revealing parameter regions of said system, which parameters ensure a uniform behavior of said chaotic dynamic system (3);
- selecting, on the basis of said identified parameter regions, parameter values for this chaotic dynamic system (3), which values ensure the step of forming said wide-band information carrier in the form of a chaotic information carrier having at least required spectrum characteristics;
- performing said step of modulating by means of forming, in accordance with the information signal (1), chaotic radio or optical pulses having a predetermined duration with predetermined time intervals between these pulses, and then transmitting the thus modulated information carrier via the communication channel;
- performing said step of receiving and demodulating at the receiving side by means of a dynamic system (5) matched in its behavior with said chaotic dynamic system (3) at the transmitting side.

**2.** The method according to Claim 1, *characterized* **in that** a dynamic self-oscillating system with at least one active element and a supplementary frequency-selective structure for forming said wide-band information carrier are used as said chaotic dynamic system (3).

**3.** The method according to Claim 2, *characterized* **in that** said dynamic self-oscillating system is supplemented with control components (9) for selecting a mode of forming said wide-band information carrier and/or forming said chaotic radio or optical pulses and intervals between them.

4. The method according to 2 Claim, ***characterized* in that** said step of forming said radio or optical pulses and intervals between them is performed in a supplementary feedback circuit of said dynamic self-oscillating system.

5. The method according to Claim 1, ***characterized* in that** said step of forming radio or optical pulses with predetermined duration and time intervals between them is performed by controlling a behavior of said chaotic dynamic system (3).

6. The method according to Claim 5, ***characterized* in that** said step of controlling the behavior of said chaotic dynamic system (3) is performed by controlling a change of parameters of said chaotic dynamic system (3).

7. The method according to Claim 5, ***characterized* in that** said step of controlling the behavior of said chaotic dynamic system (3) is performed by controlling the trajectory of the representative point in the phase state space of said chaotic dynamic system (3).

8. The method according to Claim 7, ***characterized* in that** said step of controlling the trajectory is performed by changing initial conditions of an actuation of said chaotic dynamic system (3).

9. The method according to Claim 7, ***characterized* in that** said step of controlling the trajectory is performed by holding the trajectory of the representative point in the phase state space of said chaotic dynamic system (3) in a predetermined area of said phase state space during a predetermined time period.

10. The method according to Claim 1, ***characterized* in that** durations of said chaotic radio or optical pulses and/or intervals between them are formed using chaotic samples generated by a supplementary chaotic dynamic system, and an input information to be transmitted.

11. The method according to Claim 1, ***characterized* in that** said step of receiving and demodulating at the receiving side is performed using a chaotic dynamic system (5) which behavior is at least partly synchronized with a chaotic signal of said chaotic dynamic system (3) at the transmitting side.

12. The method according to Claim 1, ***characterized* in that** said step of receiving and demodulating at the receiving side is performed using a chaotic dynamic system (5) which output signal is matched with an envelope of the signal of said chaotic dynamic system (3) at the transmitting side.

**Patentansprüche**

1. Verfahren zum Übertragen von Informationen unter Verwendung chaotischer Signale, umfassend folgende Schritte:

- vorheriges Synthetisieren eines chaotischen dynamischen Systems (3) auf der Sendeseite;
- Erzeugen eines Breitband-Informationsträgers innerhalb einer vorgegebenen Datenübertragungs-Bandbreite mittels des chaotischen dynamischen Systems (3);
- Modulieren des Informationsträgers mit einem Informationssignal (1);
- Übertragen des modulierten Informationsträgers über einen Kommunikationskanal (4) von der Sende- auf die Empfangsseite;
- Demodulieren des empfangenen Informationsträgers auf der Empfangsseite, um das Informationssignal (6) zu extrahieren;

**dadurch gekennzeichnet, dass**:

- eine Anordnung des chaotischen dynamischen Systems (3) entsprechend vorgegebener Eigenschaften des Breitband-Informationsträgers synthetisiert ist;
- beim Synthetisieren des chaotischen dynamischen Systems, Parameterregionen des Systems ermittelt werden, deren Parameter ein gleichförmiges Verhalten des chaotischen dynamischen Systems (3) sicherstellen;
- für dieses chaotische dynamische System (3), auf Basis der identifizierten Parameterregionen, Parameterwerte ausgewählt werden, die das Erzeugen des Breitband-Informationsträgers in Form eines chaotischen Informationsträgers sicherstellen, der wenigstens die erforderlichen spektralen Eigenschaften aufweist;

- der Modulierschritt unter Erzeugung von chaotischen Radiopulsen oder optischen Pulsen mit vorgegebener Länge, mit vorgegebenen Zeitintervallen zwischen diesen Pulsen, in Übereinstimmung mit dem Informationssignal (1), erfolgt, und dann der so modulierte Informationsträger über den Kommunikationskanal übertragen wird;

- das Empfangen und Demodulieren auf der Empfangsseite mittels eines dynamischen Systems (5) ausgeführt wird, das in seinem Verhalten an das chaotische dynamische System (3) auf der Sendeseite angepasst ist.

2. Verfahren nach Anspruch 1, **dadurch gekennzeichnet, dass** ein dynamisches, selbst oszillierendes System mit wenigstens einem aktiven Element, und eine zusätzliche frequenzselektive Anordnung zum Erzeugen des Breitband-Informationsträgers als das chaotische dynamische System (3) verwendet werden.

3. Verfahren nach Anspruch 2, **dadurch gekennzeichnet, dass** das dynamische selbstoszillierende System mit Steuerkomponenten (9) zum Auswählen eines Modus für das Erzeugen des Breitband-Informationsträgers und/oder für das Erzeugen der chaotischen Radio- oder optischen Pulse und der dazwischen liegenden Intervalle ausgestattet ist.

4. Verfahren nach Anspruch 2, **dadurch gekennzeichnet, dass** das Erzeugen der Radio- oder optischen Pulse und der dazwischen liegenden Intervalle in einem zusätzlichen Rückkoppelkreis des dynamischen selbstoszillierenden Systems erfolgt.

5. Verfahren nach Anspruch 1, **dadurch gekennzeichnet, dass** das Erzeugen der Radio- oder optischen Pulse mit vorgegebener Länge und den dazwischen liegenden Zeitintervallen durch Steuern eines Verhaltens des chaotischen dynamischen Systems (3) erfolgt.

6. Verfahren nach Anspruch 5, **dadurch gekennzeichnet, dass** das Steuern des Verhaltens des chaotischen dynamischen Systems (3) durch eine Änderung von Parametern des chaotischen dynamischen Systems (3) erfolgt.

7. Verfahren nach Anspruch 5, **dadurch gekennzeichnet, dass** das Steuern des Verhaltens des chaotischen dynamischen Systems (3) durch Steuern der Trajektorie des maßgeblichen Punktes im Phasen-Zustandsraum des chaotischen dynamischen Systems (3) erfolgt.

8. Verfahren nach Anspruch 7, **dadurch gekennzeichnet, dass** das Steuern der Trajektorie durch eine Änderung von Anfangsbedingungen einer Betätigung des chaotischen dynamischen Systems (3) erfolgt.

9. Verfahren nach Anspruch 7, **dadurch gekennzeichnet, dass** das Steuern der Trajektorie durch Halten der Trajektorie des maßgeblichen Punktes im Phasen-Zustandsraum des chaotischen dynamischen Systems (3) in einem vorgegebenen Bereich des Phasen-Zustandsraums während einer vorgegebenen Zeitdauer erfolgt.

10. Verfahren nach Anspruch 1, **dadurch gekennzeichnet, dass** das die Länge der chaotischen Radio- oder optischen Pulse und/oder der dazwischen liegenden Intervalle unter Verwendung von chaotischen Samples, die von einem zusätzlichen chaotischen dynamischen System erzeugt wurden, und einer zu übertragenden Eingangsinformation gebildet wird.

11. Verfahren nach Anspruch 1, **dadurch gekennzeichnet, dass** das Empfangen und Demodulieren auf der Empfangsseite unter Verwendung eines chaotischen dynamischen Systems (5) erfolgt, dessen Verhalten wenigstens teilweise mit einem chaotischen Signal des chaotischen dynamischen Systems (3) auf der Sendeseite synchronisiert ist.

12. Verfahren nach Anspruch 1, **dadurch gekennzeichnet, dass** das Empfangen und Demodulieren auf der Empfangsseite unter Verwendung eines chaotischen dynamischen Systems (5) erfolgt, dessen Ausgangssignal an eine Einhüllende des Signals des chaotischen dynamischen Systems (3) auf der Sendeseite angepasst ist.

**Revendications**

1. Un procédé de transmission d'informations au moyen de signaux chaotiques, ledit procédé comprenant les étapes consistant à :

- du côté de l'émission, synthétiser au préalable un système dynamique chaotique (3) ;

- former, au moyen dudit système dynamique chaotique (3), une porteuse d'information à large bande à l'intérieur d'une largeur de bande de transmission d'information prédéterminée ;
- moduler la porteuse d'information avec un signal d'information (1);
- transmettre la porteuse d'information modulée par l'intermédiaire d'un canal de communication (4) du côté d'émission au côté de réception ;
- du côté de la réception, démoduler la porteuse d'information reçue pour extraire le signal d'information (6);

**caractérisé en ce que** :

- une structure dudit système dynamique chaotique (3) est synthétisée selon des caractéristiques prédéterminées de ladite porteuse d'information à large bande ;
- à ladite étape consistant à synthétiser ledit système dynamique chaotique, révéler des régions de paramètres dudit système, dont les paramètres assurent un comportement uniforme dudit système dynamique chaotique (3) ;
- sélectionner, sur la base desdites régions de paramètres identifiées, des valeurs de paramètres pour ce système dynamique chaotique (3), dont les valeurs assurent l'étape consistant à former ladite porteuse d'information à large bande sous la forme d'une porteuse d'information chaotique ayant au moins des caractéristiques de spectre requises ;
- effectuer ladite étape de modulation au moyen de la formation, selon le signal d'information (1), d'impulsions radio ou optiques chaotiques ayant une durée prédéterminée avec des intervalles de temps prédéterminés entre ces impulsions, puis transmettre la porteuse d'information ainsi modulée par l'intermédiaire du canal de communication ;
- effectuer ladite étape de réception et de démodulation du côté de la réception au moyen d'un système dynamique (5) dont le comportement est mis en correspondance avec celui dudit système dynamique chaotique (3) du côté de l'émission.

2. Le procédé selon la revendication 1, **caractérisé en ce qu'**un système auto-oscillant dynamique avec au moins un élément actif et une structure de sélection de fréquence supplémentaire pour former ladite porteuse d'information à large bande est utilisé en tant que ledit système dynamique chaotique (3).

3. Le procédé selon la revendication 2, **caractérisé en ce que** ledit système auto-oscillant dynamique est complété par des composants de contrôle (9) pour sélectionner un mode de formation de ladite porteuse d'information à large bande et/ou former lesdites impulsions radio ou optiques chaotiques et les intervalles entre elles.

4. Le procédé selon la revendication 2, **caractérisé en ce que** ladite étape consistant à former lesdites impulsions radio ou optiques et les intervalles entre elles est effectuée dans un circuit de rétroaction supplémentaire dudit système auto-oscillant dynamique.

5. Le procédé selon la revendication 1, **caractérisé en ce que** ladite étape de formation d'impulsions radio ou optiques avec une durée prédéterminée et des intervalles de temps entre elles est effectuée en contrôlant un comportement dudit système dynamique chaotique (3).

6. Le procédé selon la revendication 5, **caractérisé en ce que** ladite étape consistant à contrôler le comportement dudit système dynamique chaotique (3) est effectuée en contrôlant un changement de paramètres dudit système dynamique chaotique (3).

7. Le procédé selon la revendication 5, **caractérisé en ce que** ladite étape consistant à contrôler le comportement dudit système dynamique chaotique (3) est effectuée en contrôlant la trajectoire du point représentatif dans l'espace d'état de phase dudit système dynamique chaotique (3).

8. Le procédé selon la revendication 7, **caractérisé en ce que** ladite étape consistant à contrôler la trajectoire est effectuée en changeant les conditions initiales d'un actionnement dudit système dynamique chaotique (3).

9. Le procédé selon la revendication 7, **caractérisé en ce que** ladite étape consistant à contrôler la trajectoire est effectuée en maintenant la trajectoire du point représentatif dans l'espace d'état de phase dudit système dynamique chaotique (3) dans une zone prédéterminée dudit espace d'état de phase pendant une période de temps prédéterminée.

**10.** Le procédé selon la revendication 1, **caractérisé en ce que** les durées desdites impulsions radio ou optiques chaotiques et/ou desdits intervalles entre elles sont formées en utilisant des échantillons chaotiques générés par un système dynamique chaotique supplémentaire, et une information d'entrée à transmettre.

**11.** Le procédé selon la revendication 1, **caractérisé en ce que** ladite étape consistant à recevoir et à démoduler du côté de la réception est effectuée en utilisant un système dynamique chaotique (5) dont le comportement est au moins partiellement synchronisé avec un signal chaotique dudit système dynamique chaotique (3) du côté de l'émission.

**12.** Le procédé selon la revendication 1, **caractérisé en ce que** ladite étape consistant à recevoir et à démoduler du côté de la réception est effectuée en utilisant un système dynamique chaotique (5) dont le signal de sortie est mis en correspondance avec une enveloppe du signal dudit système dynamique chaotique (3) du côté de l'émission.

Fig. 1

Fig. 2

Fig. 3

Fig. 4a

Fig. 4b

Fig. 5

Fig. 6

Fig. 7

Fig. 8a

Fig. 8b

Three-point circuit    Resonance element (RE)

Fig. 8c

Fig. 9

Fig. 10a

Fig. 10b

Fig. 11

Fig. 12a

Fig. 12b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4363130 A

- US 5923760 A

**Non-patent literature cited in the description**

- **A.S. DMITRIEV ; A.I. PANAS ; S.O. STARKOV.** Ring oscillating systems and their application to the synthesis of chaos generators. *Int. J. of Bifurcation and Chaos,* 1996, vol. 6 (5), 851-865
- **A.S. DMITRIEV ; A.I. PANAS ; S.O. STARKOV.** Dynamic chaos as a paradigm for modem telecommunication systems. *Uspekhi Sovremennoy Radielektroniki,* 1997, (10), 4
- **M. HASLER.** Achievements in the field of information transmission with the use of chaos. *Uspekhi Sovremennoy Radielektroniki,* 1998, (11), 33
- **L. KO-CAREV ; K.S. HALLE ; K. ECKERT ; L. CHUA ; U. PARLITZ.** Experimental demonstration of secure communications via chaotic synchronization. *Int. J. Bifurcation and Chaos,* 1992, vol. 2 (3), 709
- **H. DEDIEU ; M, KENNEDY ; M. HASLER.** Chaos shift keying: Modulation and demodulation of a chaotic carrier using self-synchronizing Chua's circuits. *IEEE Trans. Circuits and Systems,* October 1993, vol. CAS-40 (10), 634
- **A.R. VOLKOVSKI ; N.V. RULKOV.** Synchronous chaotic response of non-linear system of the information transmission with a chaotic carrier. *Letters to Zhurn. Techn. Fiz.,* 1993, vol. 19 (3), 71
- **A. DMITRIEV ; A. PANAS ; S. STARKOV.** Experiments on speech and music signals transmission using chaos. *Int. J. of Bifurcation and Chaos,* 1995, vol. 5 (3), 371

- **A.S. DMITRIEV ; B.E. KYARGINSKI ; N.A. MAKSIMOV ; A.I. PANAS ; S.O. STARKOV.** Prospects of creating direct chaotic communication systems in radio and microwave bands. *Radiotekhnika,* 2000, (3), 9
- **J. PROAKIS.** *Digital Communication,* 1995, 741
- **A.S. PIKOVSKI ; M.I. RABINOVICH.** A simple oscillator with stochastic behavior. *DAN SSSR,* 1978, vol. 239 (1-2), 301
- **T. MATZUMOTO.** A chaotic attractor from Chua's circuit. *IEEE Trans. Circuits and Syst,* 1984, vol. CAS-31 (12), 1055
- **A.S. DMITRIEV ; V.YA. KISLOV.** Stochastic oscillations in oscillator with inertial first-order time delay. *Radiotekhnika i Elektronika,* 1984, vol. 29 (12), 2389
- **A.S. DMITRIEV ; B.E. KYARGINSKI ; N.A. MAKSIMOV ; A.I. PANAS ; S.O. STARKOV.** Prospects of creating direct chaotic communication systems in radio and super high frequency bands. *Radiotekhnika,* 2000, (3), 9
- **YU.L. BELSKI ; A.S. DMITRIEV ; A.I. PANAS ; S.O. STARKOV.** Synthesis of band-pass signals in self-oscillating systems. *Radiotekhnika i Elektronika,* 1992, vol. 37 (4), 660
- Introduction to control of oscillations and chaos. **A.L. FRADKOV ; A.YU. POGROMSKI.** World Scientific Publishing, World Scientific Non-linear Science, Series A. 1998, vol. 35